# EUROPÄISCHE PATENTSCHRIFT

(11) **EP 2 066 506 B1**
(45) Veröffentlichungstag und Bekanntmachung des Hinweises auf die Patenterteilung: **24.12.2014**
(21) Anmeldenummer: 07802277.9
(22) Anmeldetag: 12.09.2007
(51) Int. Cl.: B60F 3/00, F41H 7/02

(54) **FAHRZEUG MIT AUFTRIEBSKÖRPER**
VEHICLE COMPRISING BUOYANCY BODIES
VÉHICULE DOTÉ DE FLOTTEURS

(30) Priorität: 28.09.2006 DE 102006046355
(43) Veröffentlichungstag der Anmeldung: 10.06.2009
(73) Patentinhaber: Rheinmetall Landsysteme GmbH, 29345 Unterlüß (DE)
(72) Erfinder: SCHMIDT, Dieter, 34277 Fuldabrück (DE); GERLACH, Klaus-Peter, 34302 Guxhagen (DE)
(74) Vertreter: Dietrich, Barbara
(86) Internationale Anmeldenummer: PCT/EP2007/007938
(87) Internationale Veröffentlichungsnummer: WO 2008/037354

(56) Entgegenhaltungen:
- CH-A- 369 675
- GB-A- 1 505 511
- US-A- 2 453 149
- US-A- 5 113 779
- US-A1- 2002 022 415

## Beschreibung

Aus der EP 1 572 529 B1 ist ein Gasgenerator für Auftriebssäcke von Wasserfahrzeugen bekannt und betrifft ein Rettungssystem für U-Boote. Dieses besteht aus mehreren Modulen, die ihrerseits im Wesentlichen eine aufblasbaren Sack und eine Gasgenerator aufweisen. Der Gasgenerator produziert dabei so viel Gas, dass der Sack in der größten Tiefe voll aufgeblasen wird. Der Gasgenerator besitzt einen Hoch- und einen Niederdruckraum, die durch eine Drossel verbunden sind.

Mit der DE 10 2004 040 A1 ist eine Auftriebshilfe für Wasserfahrzeuge veröffentlicht, die auf einen so genannten Nosinker zurückgreift. Ein Nosinker ist ein Auftriebshilfesystem, bestehend aus einem aufblasbaren Kissen oder Schlauch, welche an der Decke, am Boden und Wänden der Wohn- und Funktionsräume von Schiffen, Booten oder anderen Fahrzeugen angebracht sind, die zu irgendeinem Zeitpunkt auf dem Wasser schwimmen sollen. Der Nosinker verbleibt dabei im Fahrzeug und verhindert ein Sinken des Fahrzeuges selbst.

Ein Rettungs-System gegen Wasser-Untergang des Fahrzeugs offenbart die DE 203 02 095 U1. Mindestens ein Airbag ist dabei nach außen aufblasbar. Im gefalteten Zustand ist es unauffällig auf dem Fahrzeug aufgebracht. Im aufgeblasenen Zustand ermöglicht der Airbag, dass genügend Auftrieb erzeugt wird, um das Fahrzeug zum Schwimmen zu bringen.

Ein Seitenwand-Luftkissen wird in der DE 42 14 450 A1 beschrieben. Das dabei verwendete Gebläse regelt den Druck innerhalb der Luftkissen unter Berücksichtigung eines Stampfwinkels oder der Stampfwinkelgeschwindigkeit.

Die DE 201 07 615 U1 beschäftigt sich mit einem amphibischen Fahrzeug zur Bergung von Totholz. Dieses besitzt für das Fahren über Land ein Fahrwerk in Form von an beiden Seiten des Fahrzeugrumpfes angeordneten Rädern oder Gleisketten. An beiden Seiten des Fahrzeuggrundkörpers sind Schwimmkörper in Form von Pontons angeordnet.

Ein durch einen Druck beaufschlagter Hohlkörper wird näher betrachtet In der DE 36 01 691 C2. Die Hülle ist teilweise aus einem Schaumstoff mit geschlossenen Hohlräumen versehen, daran Volumen durch den Druck fließfähiger Medien veränderbar Ist. Der Schaumstoff ist zudem auf der Außenhaut des Hohlkörpers mit einer weitgehenden unelastischen Beschichtung beaufschlagt.

Einen schwimmfähigen Lastkraftwagen mit einer in Gestalt einer Schwimmwanne ausgebildeten Ladepritsche beschreibt die DE 29 20 786 B1. Beidseitig des Fahrzeuges sind aufblasbare elastische Seitenschwimmkörper angebracht, die Im aufgeblasenen Zustand im Wesentlichen waagerecht, Im entleerten Zustand im Wesentlichen senkrecht ausgerichtet sind. Die elastischen Seitenschwimmkörper sind samt Abdeckungen und Stützblech an Schwenkarmen angeordnet, welche ein Platzieren der Seitenschwimmkörper in einer oberen Lage über dem Fahrzeug und in einer seitlichen Einsatzlage an den beiden Längsseiten des Fahrzeuges ermöglichen.

Die US 5,113,779 A betrifft eine Schwimmhilfe für ein gepanzertes Kampffahrzeug. Die Schwimmhilfe ist an den unteren Seitenrändern beidseitig des Fahrzeugs angeordnet und verfügt über aufblasbare Airbags, die durch Betätigen eines Schalters im Fahrzeug aufgeblasen werden. Jeder der Airbags Ist mit einem Deckel oder einer Abdeckung und mit vertikalen Platten verbunden, die am Rumpf des Fahrzeuges befestigt sind und diesen teilweise abdecken bzw. schützen. Die Deckel sind ihrerseits gelenkig gegenüber den vertikalen Platten. Wenn die Airbags mit Luft aufgeblasen werden, werden die Deckel derart bewegt, dass sie zu den vertikalen Platten eine in etwa rechtwinklige Position einnehrnen. Dazu sind die Deckel und die Platten mittels einer Schnur miteinander verbunden, die sich In den Airbags befindet. Der Lufteintritt als auch der Luftaustritt erfolgen über einen gemeinsamen Anschlusa. Unterstützt werden diese Funktionen durch eine Pumpe. Die Airbags sind ihrerseits so konzipiert, dass sie sich zusammenziehen, wenn diese entleert werden, wobei sich die Deckel In Richtung der Platten zurückbewegen.

Die US 2002/022415 A1 offenbart unter anderem eine Vorrichtung zur Bereitstellung eines zusätzlichen Auftriebs mittels einer Schwimmhilfe eines Amphibienfahrzeuges, wodurch die Sicherheit des Amphibienfahrzeuges zum Zeitpunkt des Fahrens auf dem Wasser erhöht wird. Die Schwimmhilfe umfasst einen Plattenrahmen aus mehreren Rahmen, zwischen denen elastische Elemente eingebunden sind. Der äußere Rahmen kann mit Hilfe eines Zylinders geschwenkt werden, so dass sich die Schwimmhilfe entfaltet kann und der Auftriebsraum mit Luft gefüllt wird. Die Schwimmhilfe kann sich auch wieder einfalten.

Aus der US 2,453,149 A Ist eine Auftriebsvorrichtung für Standardpanzer mit Propellerantrieb bekannt, die beidseitig der Ketten am Fahrzeug angebracht Ist. Die Auftriebseinrichtung umfasst zwei Platten, zwischen denen faltbare Mittel eingebunden sind. Die Platten sind über ein Drehgelenk miteinander verbunden, so dass die obere bzw. vordere Platte nach oben geschwenkt werden kann, wenn sich die Mittel entfalten. Bezüglich des sich wieder Faltens werden keine Aussagen getroffen.

Die CH 369 675 A betrifft ein Amphibienfahrzeug, bei dem seitlich je ein Schwimmkörper engeordnet ist. Diese sind über Ventile mit einer Druckluftquelle Im Wagen verbunden und können zusätzlich mit einer Saugvorrichtung verbunden werden. Die Schwimmkörper werden über die Ventile mit Luft gefüllt, Zum Falten kann die Luft aus den Ventilen strömen oder aber aus den Schwimmkörpern gesaugt werden.

Die GB 1 505 611 A beschreibt eine faltbare Schwimmvorrichtung zur Nutzung an einem Körper.

In der Praxis sind für das Befüllen der Schwimmkörper bzw. der Airbags separate Gasgeneratoren vorgesehen. Diese benötigen einen zusätzlichen Platz am / im Fahrzeug.

Die Erfindung stellt sich gleichfalls die Aufgabe, ein Insbesondere mit einem höheren Gewicht versehenes Fahrzeug (Zusatzpanzerung) schwimmfähig zu machen, unterliegt aber der Problematik der baulichen Begrenztheit im Fahrzeug.

Gelöst wird die Aufgabe durch die Merkmale des Patentanspruchs 1. Vorteilhafte Ausführungen sind in den Unteransprüchen enthalten.

Der Erfindung liegt die Idee zugrunde, die aufblasbaren Auftriebskörper außen am Fahrzeug in beispielsweise vorhandenen Staukästen integriert anzuordnen. Im normalen Einsatz sind sie zusammengefaltet unter Abdeckungen verstaut. Nur im Schwimmbetrieb werden die Abdeckungen geöffnet und die Auftriebskörper mit Luft befüllt. Die Luft zum Befüllen der Auftrlebskörper liefert vorzugsweise eine bordeigene Druckluftanlage, so dass Luft, die nicht zur Unterstützung beispielsweise einer Bremsanlage oder dergleichen benötigt wird, für die Befüllung der Auftriebskörper genutzt wird.

Durch das Ejektorprinzip (z. B. Lavaldüse) wird dabei in Weiterführung der Erfindung neben der bordeigenen Luft durch zusätzliche Aufnahme der Außenluft mehr Luft bei geringem Druck in die Auftriebskörper gefördert, als die bordeigene Druckluftanlage zur Verfügung stellt.

Mit Sensoren wird der Druck in den Auftriebskörpern gemessen und Absperrventile entsprechend angesteuert.

Zum Entleeren der Auftriebskörper wird das Ejektorprinzip erneut genutzt, um ein Vakuum in den Anschlussleitungen zu erzeugten. Bei geöffneten Absperrventilen wird die Luft aus den Auftriebskörpern gesaugt. Die Auftriebskörper falten sich zusammen und die Abdeckungen werden geschlossen und verriegelt.

Die Betätigung und Verriegelung der Abdeckklappen erfolgt vorzugsweise durch Hydraulikzylinder, die ihre Energie von der bordeigenen Hydraulikanlage erhalten. Elektrohydraulische Ventile, Druck- und Lagesensoren steuern die Aktuatoren.

Die Vorbereitung zum Schwimmbetrieb oder die Rückrüstung kann mit einem computergesteuerten Programm oder einer manuellen Steuerung durchgeführt werden.

Die aufblasbaren Auftriebskörper sind beispielsweise aus gummiertem Gewebe. Größere Körper können in mehrere unabhängige Kammern aufgeteilt sein. Die Auftriebskörper sind an den Staukörpern und den Abdeckklappen vorzugsweise mit Kederprofilen befestigt. Diese besitzen die Eigenschaft eines guten Rückstellverhaltens. Im Inneren der Auftriebskörper sind elastische Züge angebracht, die insbesondere beim Entleeren für ein gezieltes Zusammenfalten sorgen. Mit elektrisch betätigten Ventilen ist jeder Körper oder jede Kammer einzeln absperrbar.

Der Vorteil diese Lösung liegt unter anderem darin, dass sie keinen zusätzlichen Bauraum benötigt. Es wird auf eine vorhandene Anlage im Fahrzeug zurückgegriffen. Zudem kann das Befüllen und Entleeren unter ABC-Schutz durchgeführt werden, die Besatzung muss den ABC - geschützten Innenraum nicht verlassen, das System ist von Innen bedienbar. Die Größe der Auftriebskörper ist zudem auf das Fahrzeug (Zusatzpanzerung) individuell abstimmbar.

Anhand eines Ausführungsbeispiels mit Zeichnung soll die Erfindung näher erläutert werden. Es zeigt:
- Fig. 1: ein Fahrzeug mit geschlossenen Abdeckungen,
- Fig. 2: das Fahrzeug bereit zum Schwimmbetrieb mit geöffneten Abdeckungen,
- Fig. 3: die befüllten Auftriebskörper mit geöffneten Abdeckungen aus einer Perspektive von hinten auf das Fahrzeug,
- Fig. 4: eine Darstellung des Entleerens des Auftriebskörpers und Schließens der Abdeckung,
- Fig. 5: eine Funktionsdarstellung des Befüll- sowie Entleervorganges der Auftriebskörper.

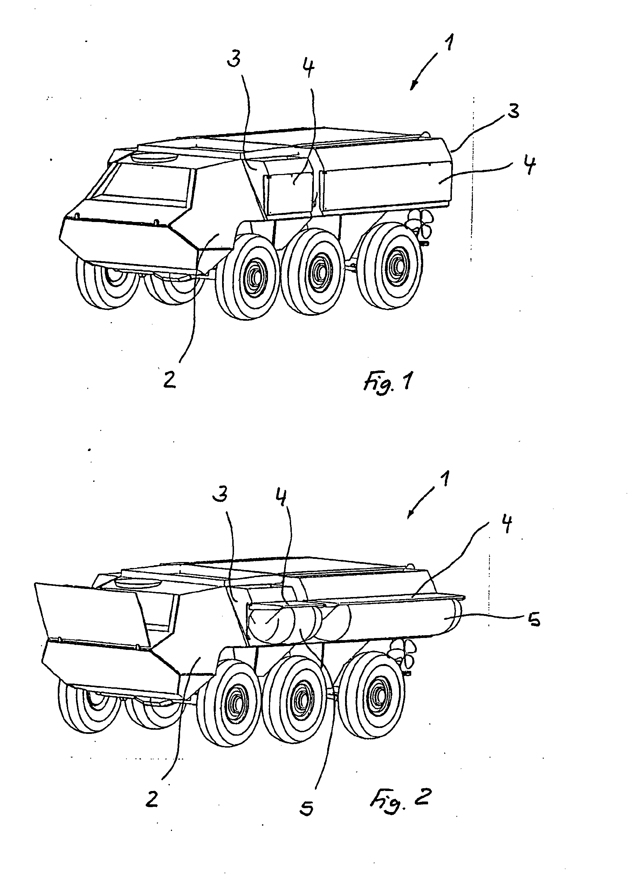

Fig. 1 zeigt ein Fahrzeug 1, welches in diesem Ausführungsbeispiel mit einer Zusatzpanzerung 2 versehen ist und Stauräume 3 aufweist. Die Stauräume 3 sind durch Abdeckungen 4 verschlossen.

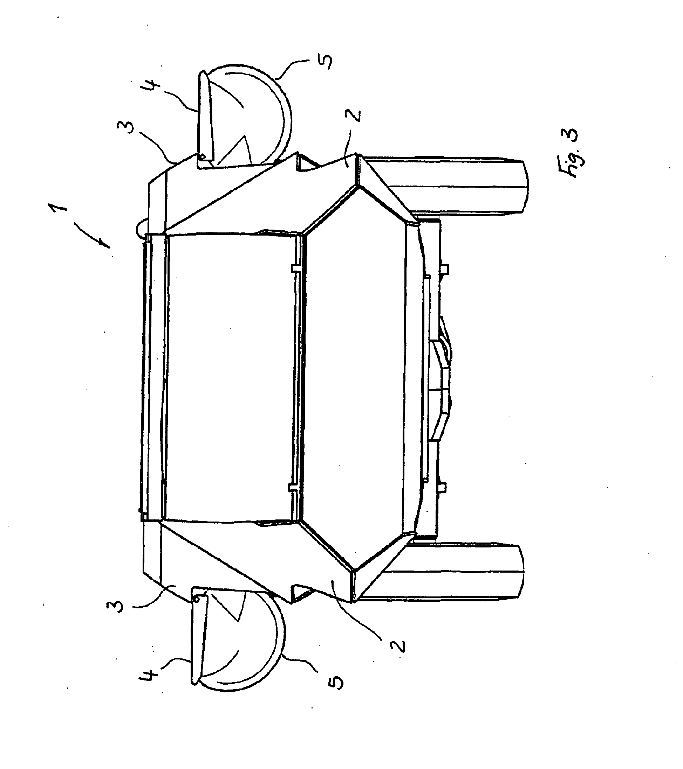

In den Stauräumen 3 befinden sich unter den Abdeckungen 4 Auftriebskörper 5, die in Fig. 2 befüllt dargestellt sind. Die Auftriebskörper 4 sind in den Stauräumen 3 bzw. am Fahrzeug 1 zumindest beidseitig (Fig. 3) untergebracht.

Die Auftriebskörper 5 bestehen vorzugsweise aus einem gummierten Gewebe, wobei auch andere Formen möglich sind, und besitzen innen befindlich elastische Züge (nicht näher dargestellt). Die Auftriebskörper 5 sind an den Staukörpern 3 und den Abdeckklappen 4 vorzugsweise mit Kederprofilen (nicht näher dargestellt) befestigt.

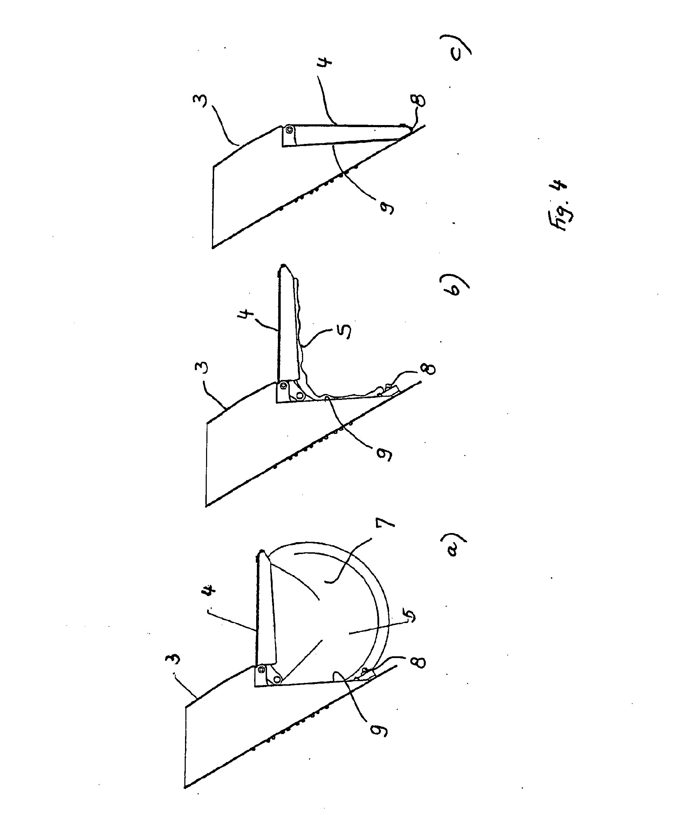

In Fig. 4 ist der Ablauf des Entleerens der Auftriebkörper 5 dargestellt. Im Fig. 4 a) ist der Auftriebskörper 6 befüllt. Durch Entzug der im Auftriebskörper 5 befindlichen Luft 7 (wird noch ausgeführt) faltet sich der hier dargstellte Auftriebskörper 5 zusammen. Mit dem Zusammenfalten des Auftriebsköpers 5 legt sich dieser in den rechten Winkel zwischen Abdeckklappe 4 und der Wanne 9 des Fahrzeuges 1 (Fig. 4 b). Die Abdeckklappe 4 wird dann durch eine Hydraulik geschlossen (Fig. 4c) und mittels eines Riegels 8 an der Wanne 9 verriegelt.

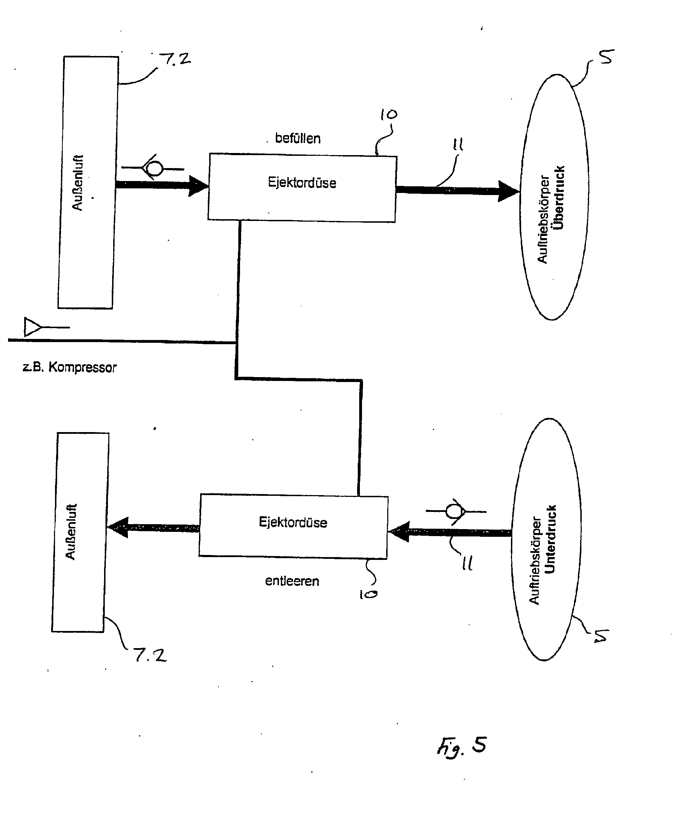

Das Befüllen bzw. Entleeren wird anhand der Fig. 5 vergegenständlicht.

Wird ein schwimmfähiger Zustand des Fahrzeuges 1 benötigt, wird elektronisch oder manuell ausgelöst, das Lösen der Abdeckungen 4 von der Wanne 9 bewirkt. Dazu werden die Verriegelungen 8 gelöst und die Auftriebskörper 5 mit Luft 7 eines bordeigenen Luftsystems, beispielsweise einer Bremsanlage, über Zuleitungen 11 befüllt.

Um ein schnelleres Befüllen zu ermöglichen oder um die Befüllung zu unterstützen, beispielsweise weil die Luftmenge des bordeigenen Systems nicht ausreichend ist, ist es möglich, auch die Außenluft 7.2 zu nutzen. Über eine Ejektordüse 10 in der Zuleitung 11 werden nunmehr die Fahrzeugsystemluft 7.1 und die Außenluft 7.2 angesaugt und die Auftriebskörper 5 damit beaufschlagt. Diese befüllen sich kontinuierlich mit Luft 7. Über nicht näher dargestellte Sensoren wird die Befüllung kontrolliert und entsprechende Abschaltungen der Ventile (nicht näher dargestellt) vorgenommen. Das Fahrzeug 1 ist nunmehr schwimmfähig.

Wird der schwimmfähige Zustand nicht mehr benötigt, erfolgt über dieselbe Zuleitung 11 nunmehr das Entleeren der Auftriebskörper 5. Durch Erzeugung eines Unterdrucks gelangt die gesamte Luft 7 wieder an / in die Umgebung zur Außenluft 7.2. Hierzu kann die Ejektordüse 10 verwendet werden. Dieser Vorgang kann beliebig of wiederholt werden.

Es versteht sich, dass unter Fahrzeug alle Fahrzeuge verstanden werden, die im Wasser oder dergleichen schwimmfähig sein sollen. Dies können auch Luftfahrzeuge sein, bei denen ein Notwassern als Schutzmaßnahme vorgesehen ist. Die Auftriebskörper 5 sollten dann in der Außenhaut des Fahrzeuges integriert sein. Da kontrollierte Lösen der Verriegelung der Abdeckungen kann dann beispielsweise durch Absprengen eines Bolzens oder dergleichen vor Auftreffen auf das Wasser vorgenommen werden. Andere Alternativen sind auch möglich. Zur Unterstützung des Befüllens der Auftriebskörper kann dann wie hier vorgeschlagen die Außenluft mit einbezogen werden.

## Patentansprüche

1. Fahrzeug (1) mit wenigstens einem Auftriebskörper (5), welcher am Fahrzeug (1) angebracht ist, wobei die Befüllung des Auftriebskörpers (5) durch Zuführung von Luft (7) eines bordeigenen Luftsystems über wenigstens eine Zuleitung (11) erfolgt, **dadurch gekennzeichnet, dass** zusätzlich der bordeigenen Luft (7.1) die Außenluft (7.2) angesaugt werden kann, mit welcher der wenigstens eine Auftriebskörper (5) beaufschlagt wird, wozu eine Ejektordüse (10) in der Zuleitung (11) eingebunden ist.

2. Fahrzeug nach Anspruch 1, **dadurch gekennzeichnet, dass** die Auftriebskörper (5) in mehrere unabhängige Kammern aufgeteilt sein können.

3. Fahrzeug nach Anspruch 1 oder 2, **dadurch gekennzeichnet, dass** über elektrisch betätigte Ventile jeder Auftriebskörper (5) oder jede Kammer einzeln absperrbar ist.

4. Fahrzeug nach Anspruch 3, **dadurch gekennzeichnet, dass** Sensoren die Befüllung kontrollieren und entsprechende Abschaltungen der Ventile vornehmen.

5. Fahrzeug nach einem der Ansprüche 1 bis 4, **dadurch gekennzeichnet, dass** Auftriebskörper (5) beidseitig am Fahrzeug (1) angebracht sind.

6. Fahrzeug nach einem der Ansprüche 1 bis 5, **dadurch gekennzeichnet, dass** die Auftriebskörper (5) am Fahrzeug (1) in Stauräumen (3) mit Abdeckungen (4) untergebracht sind.

7. Fahrzeug nach Anspruch 6, **dadurch gekennzeichnet, dass** die Auftriebskörper (5) an den Staukörpern (3) und den Abdeckungen (4) vorzugsweise mit Kederprofilen befestigt sind.

8. Fahrzeug nach einem der Ansprüche 1 bis 7, **dadurch gekennzeichnet, dass** im Inneren der Auftriebskörper (5) elastische Züge angebracht sind.

9. Fahrzeug nach einem der Ansprüche 1 bis 8, **dadurch gekennzeichnet, dass** die Auftriebskörper (5) vorzugsweise aus einem gummierten Gewebe bestehen.

10. Fahrzeug nach einem der Ansprüche 1 bis 9, **dadurch gekennzeichnet, dass** durch Entzug der in den Auftriebskörpern (5) befindlichen Luft (7) sich die Auftriebskörper (5) zusammenfalten, wobei die Auftriebsköper (5) sich im rechten Winkel zwischen Abdeckklappe (4) und der Wanne (9) des Fahrzeuges 1 anlegen und die jeweilige Abdeckklappe (4) dann über eine Hydraulik geschlossen und verriegelt wird.

11. Fahrzeug nach einem der Ansprüche 6 oder 7, **dadurch gekennzeichnet, dass** Hydraulikzyfinder die Betätigung und Verriegelung,(8) der Abdeckungen (4) bewirken.

12. Fahrzeug nach einem der Ansprüche 1 bis 11, **dadurch gekennzeichnet, dass** das Befüllen und Entleeren unter ABC-Schutz durchgeführt werden kann und die Besatzung den ABC-geschützten Innenraum nicht verlassen muss, da das System von Innen bedienbar ist.

## Claims

1. Vehicle (1) having at least one buoyancy body (5) which is attached to the vehicle (1), the filling of the buoyancy body (5) being effected by air (7) of an on-board air system being fed via at least one feed line (11), **characterized in that**, in addition to the on-board air (7.1), the exterior air (7.2) can be sucked in, with which the at least one buoyancy body (5) is loaded, to which end an ejector nozzle (10) is incorporated into the feed line (11).

2. Vehicle according to Claim 1, **characterized in that** the buoyancy bodies (5) can be divided into a plurality of independent chambers.

3. Vehicle according to Claim 1 or 2, **characterized in that** each buoyancy body (5) or each chamber can be shut off individually via electrically actuated valves.

4. Vehicle according to Claim 3, **characterized in that** sensors control the filling operation and perform corresponding switching-off operations of the valves.

5. Vehicle according to one of Claims 1 to 4, **characterized in that** buoyancy bodies (5) are attached to both sides of the vehicle (1).

6. Vehicle according to one of Claims 1 to 5, **characterized in that** the buoyancy bodies (5) are accommodated on the vehicle (1) in stowage spaces (3) with covers (4).

7. Vehicle according to Claim 6, **characterized in that** the buoyancy bodies (5) are fastened to the stowage bodies (3) and the covers (4), preferably by way of beading profiles.

8. Vehicle according to one of Claims 1 to 7, **characterized in that** elastic lanyards are attached in the interior of the buoyancy bodies (5).

9. Vehicle according to one of Claims 1 to 8, **characterized in that** the buoyancy bodies (5) are preferably composed of a rubberized woven fabric.

10. Vehicle according to one of Claims 1 to 9, **characterized in that** the buoyancy bodies (5) are folded together as a result of extraction of the air (7) which is situated in the buoyancy bodies (5), the buoyancy bodies (5) being set at a right angle between the covering flap (4) and the tub (9) of the vehicle (1), and the respective covering flap (4) then being closed and locked via a hydraulic system.

11. Vehicle according to either of Claims 6 and 7, **characterized in that** hydraulic cylinders bring about the actuation and locking (8) of the covers (4).

12. Vehicle according to one of Claims 1 to 11, **characterized in that** filling and emptying can be carried out under NBC protection and the crew does not have to leave the NBC-protected interior, since the system can be operated from the interior.

## Revendications

1. Véhicule (1) comprenant au moins un corps flottant (5), qui est monté sur le véhicule (1), le remplissage du corps flottant (5) s'effectuant par apport d'air (7) d'un système d'air embarqué par le biais d'au moins une conduite d'amenée (11), **caractérisé en ce qu'**en plus de l'air embarqué (7.1), de l'air extérieur (7.2) peut être aspiré, lequel sollicite l'au moins un corps flottant (5), ce pourquoi une buse d'éjection (10) est incorporée dans la conduite d'amenée (11).

2. Véhicule selon la revendication 1, **caractérisé en ce que** les corps flottants (5) peuvent être divisés en plusieurs chambres indépendantes.

3. Véhicule selon la revendication 1 ou 2, **caractérisé en ce que** chaque corps flottant (5) ou chaque chambre peut être bloqué(e) individuellement par le biais de soupapes à commande électrique.

4. Véhicule selon la revendication 3, **caractérisé en ce que** des capteurs contrôlent le remplissage et effectuent des coupures correspondantes des soupapes.

5. Véhicule selon l'une quelconque des revendications 1 à 4, **caractérisé en ce que** des corps flottants (5) sont montés de chaque côté du véhicule (1).

6. Véhicule selon l'une quelconque des revendications 1 à 5, **caractérisé en ce que** les corps flottants (5) sont montés sur le véhicule (1) dans des espaces de rangement (3) avec des recouvrements (4).

7. Véhicule selon la revendication 6, **caractérisé en ce que** les corps flottants (5) sont fixés aux corps de rangement (3) et aux recouvrements (4), de préférence avec des profils en bourrelets.

8. Véhicule selon l'une quelconque des revendications 1 à 7, **caractérisé en ce qu'**à l'intérieur des corps flottants (5) sont montés des éléments de traction élastiques.

9. Véhicule selon l'une quelconque des revendications 1 à 8, **caractérisé en ce que** les corps flottants (5) se composent de préférence d'un tissu caoutchouté.

10. Véhicule selon l'une quelconque des revendications 1 à 9, **caractérisé en ce que** les corps flottants (5) sont repliés par retrait de l'air (7) se trouvant dans les corps flottants (5), les corps flottants (5) s'appliquant à angle droit entre le volet de recouvrement (4) et la caisse (9) du véhicule (1) et le volet de recouvrement respectif (4) étant ensuite fermé et verrouillé par le biais d'un système hydraulique.

11. Véhicule selon l'une quelconque des revendications 6 ou 7, **caractérisé en ce que** des cylindres hydrauliques provoquent l'actionnement et le verrouillage (8) des recouvrements (4).

12. Véhicule selon l'une quelconque des revendications 1 à 11, **caractérisé en ce que** le remplissage et la vidange peuvent s'effectuer avec protection ABC et l'équipage n'a pas besoin de quitter l'espace intérieur muni de la protection ABC, car le système peut être commandé de l'intérieur.
